# FASCICULE DE BREVET EUROPEEN

(11) **EP 3 436 869 B1**
(45) Date de publication et mention de la délivrance du brevet: **27.11.2019**
(21) Numéro de dépôt: 17716806.9
(22) Date de dépôt: 24.03.2017
(51) Int. Cl.: G02B 27/01

(54) **SYSTEME DE VISUALISATION DE TETE A PONTETS POUR AERONEF COMPATIBLE D'UN CASQUE AUDIO**
FLUGZEUGKOPFMONTIERTES VISUALISIERUNGSSYSTEM MIT AUDIOKOPFHÖRERKOMPATIBLEN SCHLIESSEN
AIRCRAFT HEAD-MOUNTED VISUALISATION SYSTEM WITH HASPS COMPATIBLE WITH AUDIO HEADPHONES

(30) Priorité: 01.04.2016 FR 1600550
(43) Date de publication de la demande: 06.02.2019
(73) Titulaire: Thales, 92400 Courbevoie (FR)
(72) Inventeur: BAUDOU, Joël, 33160 SAINT MEDARD EN JALLES (FR); MEYER, Guy, 33160 SAINT MEDARD EN JALLES (FR)
(74) Mandataire: Bréda, Jean-Marc
(86) Numéro de dépôt international: PCT/EP2017/057099
(87) Numéro de publication internationale: WO 2017/167665

(56) Documents cités:
- EP-A1- 1 202 566
- JP-A- H0 990 268
- JP-A- H11 161 188
- US-A1- 2002 030 649
- US-B1- 6 496 161

## Description

Le domaine de l'invention est celui des systèmes de visualisation portés par la tête d'un utilisateur. Ces systèmes permettent en particulier l'affichage d'informations en superposition sur le paysage extérieur. On les connaît notamment sous le terme anglais de « See-through HMD », « HMD » étant l'acronyme de « Head Mounted Display ». Ils peuvent être monoculaires ou binoculaires. Ils sont utilisés dans différentes applications.

Ils sont notamment utilisés dans les cockpits d'aéronefs civils et militaires pour présenter au pilote des informations essentielles concernant le pilotage ou la navigation. Dans ce type d'applications, ils sont associés aux moyens de communication audio également portés par la tête de l'utilisateur. Pour présenter des informations en position conforme, c'est-à-dire à l'emplacement exact que ces informations occupent sur l'extérieur, il est nécessaire de parfaitement connaître l'orientation ou la posture du système de visualisation dans l'espace. Aussi, le dispositif de visualisation est également associé à un système de détection de posture.

Les dispositifs de visualisation portés par la tête sont généralement montés sur un casque. Le casque est destiné à la protection aux chocs et supporte la fonction communication audio comprenant les deux écouteurs et le microphone. Le casque de protection et de communication réalise l'interface avec la tête et sert également de support au dispositif d'affichage. Ces dispositifs de visualisation montés sur casque sont aujourd'hui réservés au domaine militaire ou paramilitaire.

Les dispositifs de visualisation montés sur la tête présentent également un intérêt pour des applications civiles en aviation générale ou commerciale. Pour ces applications civiles, le port d'un casque de protection n'est ni indispensable ni souhaitable. En effet, un casque présente un encombrement trop important en cockpit. Par ailleurs, il procure une sensation de chaleur et d'isolement. Enfin, la vision par les passagers d'un pilote casqué peut poser des problèmes d'image aux compagnies aériennes.

Le casque de communication audio fait partie de l'équipement et des codes visuels des pilotes de l'aviation civile. Le montage d'un dispositif d'affichage compact et discret compatible du casque audio ajoute une image «connectée» acceptable par le pilote et les passagers.

Il existe des dispositifs civils grand public de réalité augmentée dits « see-through » susceptibles d'afficher les informations de vol. Ces dispositifs sont généralement des lunettes telles les « Google Glass » développées par la société Google. Ces lunettes très légères ne sont généralement pas compatibles ni du port de lunettes de vue, ni des casques de communication audio, ni des masques respiratoires utilisées en aéronautique. D'autre part, ces systèmes n'ont pas les performances requises pour des applications aéronautiques.

Des harnais de tête comportant des fixations réglables ou élastiques ont également été réalisés permettant de fixer des systèmes optiques comme des caméras miniatures développées par la société GoPro ou des loupes binoculaires chirurgicales. Ces systèmes ne sont pas conçus pour être compatibles de port de casque audio ni pour être utilisés dans un environnement aéronautique.

Il existe aussi des projets de casques audio comportant un dispositif de visualisation pour des applications grand public mais les performances du dispositif d'affichage ou de détection de posture ne sont pas applicables à une utilisation aéronautique, en particulier pour des raisons de précision de conformité des images présentées avec le paysage réel et de fiabilité et de visibilité de ces informations. L'isolation phonique doit également être assurée avec une très grande efficacité de façon à protéger le pilote des bruits environnants.

Enfin, la société Elbit a développé un système de visualisation connu sous la marque « Skylens™ » logé dans un masque de type masque de ski et qui se fixe sur la tête au moyen d'un bandeau élastique. Ce système ne peut pas être monté facilement en présence d'un casque de communication audio.

Un dispositif d'affichage et de détection de posture destiné à une utilisation aéronautique a une masse d'au moins 200 g. Il est donc nécessaire de le disposer devant l'œil du pilote de façon que la masse et l'inertie du dispositif de visualisation n'entraine pas un glissement vers l'avant de l'ensemble conduisant à la perte visuelle de l'information. Un équilibrage du moment induit par cette masse est donc nécessaire. Ce moment peut être compensé par un appui sur le nez ou le visage. Ces dernières solutions ne sont pas ou peu compatibles avec le port de lunettes de vue ou de soleil.

Ce moment peut également être compensé par l'ajout d'un lest d'équilibrage ou d'un appui sur l'arrière de la tête. Pour être efficace, le lest ou l'appui doivent se trouver à la base du crâne au niveau de Union ou de la nuque de l'utilisateur. La solution de l'appui sur la nuque est plus légère et moins fatigante sur les longs trajets que le lest. Cependant, ce système doit rester compatible du port de casque de communication audio.

Des exemples de systèmes de visualisation conventionnels sont divulgués dans les documents EP 1 202 566, JP H11 161188, US 6 496 161, JP H09 90268, US 2002/030649.

Le système de visualisation de tête selon l'invention ne présente pas les inconvénients précédents. II comporte un serre-tête comprenant des pontets latéraux qui permettent de monter le système sur la tête de l'utilisateur, même si celui-ci porte un casque audio. II permet ainsi d'assurer à la fois une bonne fixation du dispositif de visualisation de casque tout en étant parfaitement compatible du port d'un casque audio standard de type aéronautique.

Plus précisément, l'invention a pour objet un système de visualisation tel que défini dans la revendication indépendante 1.

Avantageusement, le serre-tête comporte un second arceau de tête réglable en longueur.

Avantageusement, le serre-tête comporte une cale de nuque réglable en longueur.

Avantageusement, le dispositif de visualisation comporte un module optique comprenant un afficheur, une optique de collimation et une lame optique mince de superposition d'images.

Avantageusement, le dispositif de visualisation comporte un ensemble de détection de posture fixé sur le module optique.

Avantageusement, l'ensemble de détection de posture est hybride et comporte un système de reconnaissance optique et un capteur inertiel.

Avantageusement, le serre-tête comporte des moyens de translation et de rotation du dispositif de visualisation, lesdits moyens de rotation comportant un pivot ou une rotule articulés.

Avantageusement, le dispositif de visualisation a une première position d'utilisation dans laquelle la lame optique est disposée devant un œil de l'utilisateur et une seconde position de rangement, ladite seconde position étant sensiblement perpendiculaire à la première position, la lame optique étant disposée au niveau du front de l'utilisateur dans cette seconde position.

L'invention sera mieux comprise et d'autres avantages apparaîtront à la lecture de la description qui va suivre donnée à titre non limitatif et grâce aux figures annexées parmi lesquelles :
La figure 1 représente une vue en perspective d'un système de visualisation de tête selon l'invention ;
La figure 2 représente un casque audio de type aéronautique ;
La figure 3 représente un système de visualisation de tête selon l'invention monté sur le casque audio de la figure 2 ;
La figure 4 représente une vue de face d'un système de visualisation de tête selon l'invention en position d'utilisation ;
La figure 5 représente une vue de face d'un système de visualisation de tête selon l'invention en position de rangement.

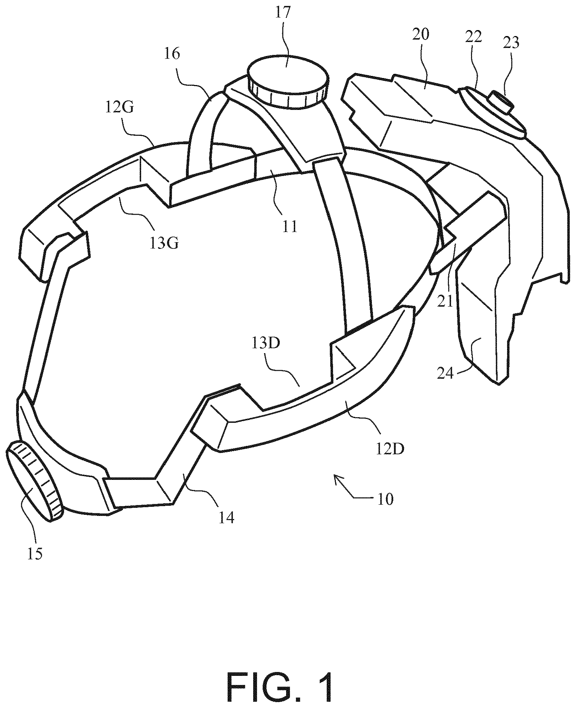

A titre d'exemple non limitatif, la figure 1 représente une vue en perspective d'un système de visualisation de tête selon l'invention. Ce système de visualisation comporte essentiellement deux parties principales qui sont un serre-tête 10 en forme de bandeau et un dispositif de visualisation 20 monté sur ledit serre-tête.

Le serre-tête comporte un appui frontal 11, deux pontets latéraux identiques 12D et 12G, un repose-nuque 14 et un arceau de tête 16.

Les pontets latéraux sont en forme d'arche et comportent chacun une ouverture 13D ou 13G située au niveau des oreilles d'un utilisateur. La largeur de cette ouverture est comprise entre un à deux centimètres et sa longueur est de trois à cinq centimètres de façon à ménager un espace suffisant entre la tête de l'utilisateur et le serre-tête. Cet espace permet de monter le système de visualisation sur la tête d'un utilisateur portant un casque audio sans qu'il lui soit nécessaire d'enlever son casque audio. Les pontets ont un profil extérieur lisse et arrondi afin d'éviter les risques d'accrochage avec des câbles extérieurs.

Le repose-nuque 14 comporte deux bras de longueur réglable au moyen d'une molette 15. Ce réglage peut être réalisé, par exemple, au moyen d'un système à crémaillère ou de tout autre moyen de réglage mécanique. Ce réglage est de quelques centimètres, suffisant pour adapter le serre-tête aux variations morphologiques des têtes humaines. De la même façon, l'arceau 16 comporte également deux bras de longueur réglable au moyen d'une molette 17. Ce réglage peut être réalisé, là aussi, au moyen d'un système à crémaillère ou de tout autre moyen de réglage mécanique. Cet arceau est situé en avant des pontets de façon à laisser passer un casque audio. Les réglages sont mémorisés soit par un système cranté, soit par l'adhérence et les frottements des bras dans leurs glissières.

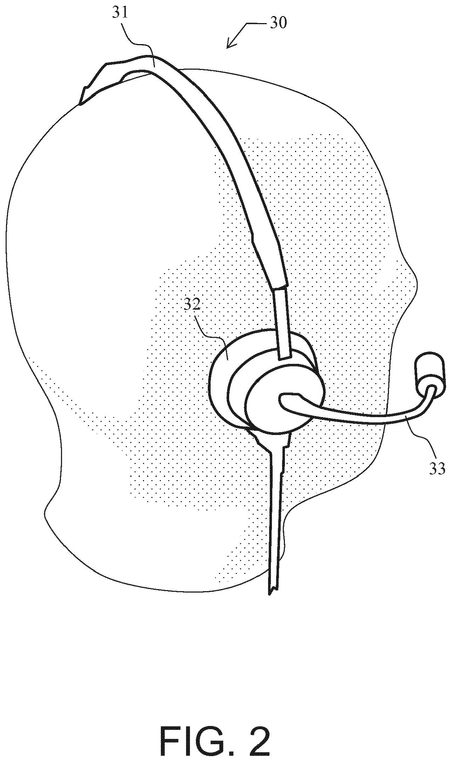

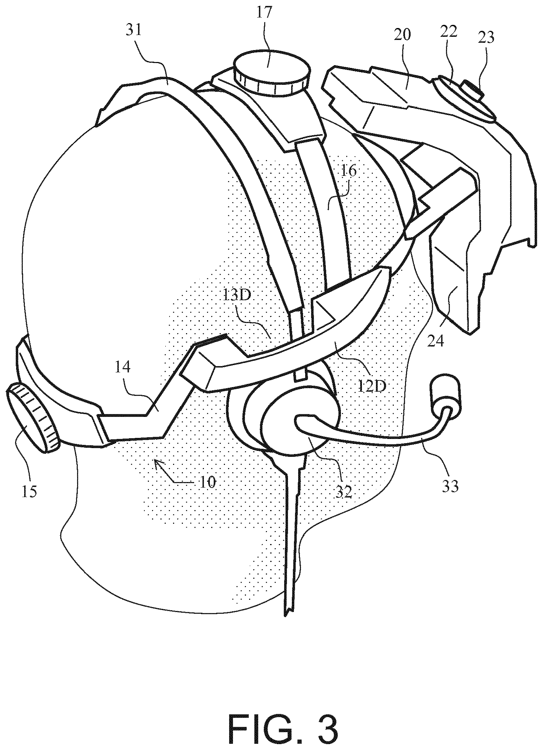

La figure 2 représente un casque audio 30 de type aéronautique. Il comporte un arceau 31, deux écouteurs audio 32 et un microphone 33. La figure 3 représente le système de visualisation selon l'invention de la figure 1 monté sur le casque audio de la figure 2. Pendant les phases de mise en place ou d'enlèvement du système de visualisation, les bras porte-écouteurs du casque audio passent librement à travers les ouvertures 13D et 13G des pontets. L'arceau 16 du serre-tête est disposé en avant de l'arceau 31 du casque audio.

Le dispositif de visualisation 20 est monté sur l'appui frontal 11 du serre-tête. II comporte un module optique et un ensemble de détection de posture. Sur les différentes figures, le module optique est monoculaire. Le serre-tête selon l'invention est compatible du port de modules binoculaires.

Le module optique comprend un afficheur, une optique de collimation et une lame optique mince 24 de superposition d'images. Généralement, l'afficheur est une micro-matrice à cristaux liquides à forte luminance, l'optique de collimation est une optique centrée donnant de l'imageur une image à l'infini. La lame optique est une lame mince comportant une pluralité de lames semi-réfléchissantes internes inclinées assurant à la fois la transmission de l'image collimatée et sa superposition sur l'extérieur. La distance entre l'œil de l'utilisateur et la lame optique est de quelques centimètres de façon à permettre le port de lunettes de vue. D'autres solutions optiques sont envisageables.

L'ensemble de détection de posture est solidaire du module optique. II est situé dans la zone frontale. Cet ensemble permet de localiser parfaitement le système de visualisation dans un repère lié à l'aéronef ou dans un repère terrestre. On peut ainsi générer des images conformes qui se superposent exactement au paysage extérieur.

Préférentiellement, l'ensemble de détection de posture est hybride et comporte un système de reconnaissance optique 22 et un capteur inertiel 23 comme représenté sur la figure 1. Le système de reconnaissance optique intègre une caméra associée à un logiciel de reconnaissance de forme et un algorithme de calcul de distance et de position. Le capteur inertiel permet une compensation du temps de calcul des distances et des positions par une prédiction du mouvement. La précision du système est assurée par le système de reconnaissance optique et la cadence de rafraîchissement par le capteur inertiel.

L'appui frontal comporte des réglages mécaniques en translation et en rotation permettant de positionner parfaitement le dispositif de visualisation devant l'œil de l'observateur. Des repères présents dans l'image permettent de positionner parfaitement le dispositif de visualisation devant l'œil de l'utilisateur de façon qu'il puisse voir l'ensemble du champ optique donné par le module optique.

La translation verticale du dispositif de visualisation est réalisée par la tension de l'arceau de tête 16 au moyen de la molette 17, la translation latérale est réalisée par une faible rotation du serre-tête autour de la tête.

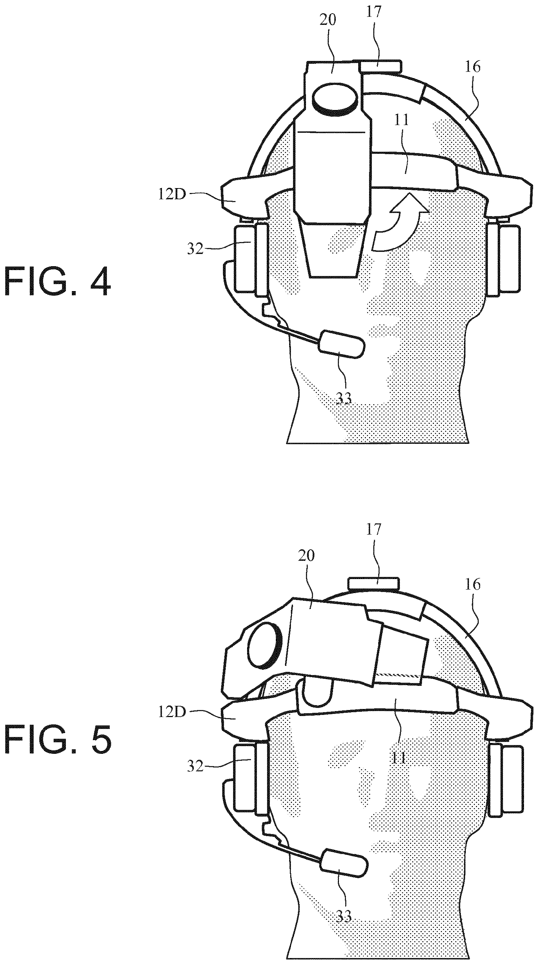

Comme on le voit sur les figures 4 et 5, le dispositif de visualisation peut être monté sur un pivot ou une rotule articulée 21 de façon à avoir deux positions : une première position d'utilisation illustrée sur la figure 4, dans laquelle la lame optique est disposée devant l'œil de l'utilisateur et une seconde position de rangement illustré par la figure 5, ladite seconde position étant sensiblement perpendiculaire à la première position, la lame optique étant disposée au niveau du front de l'utilisateur dans cette seconde position.

La liaison rotule entre le serre-tête et le dispositif d'affichage présente un premier axe de rotation vertical qui permet de compenser l'angle de rotation du serre-tête afin conserver le centre du champ du dispositif de visualisation dans l'axe de la tête et un second axe de rotation sensiblement horizontal qui permet de pivoter le dispositif de visualisation hors du champ visuel en position de rangement.

La liaison rotule permet également de pivoter aisément le dispositif de visualisation sans interférer avec le nez. Pour la seule fonction de rangement, un pivot horizontal est suffisant.

Les câbles d'alimentation du module optique et de la détection de posture cheminent au travers de la rotule articulée et le long du serre-tête et sortent devant l'oreille pour ne pas interférer avec le cordon d'alimentation du casque audio. Ces câbles ne sont pas représentés sur les différentes figures.

## Revendications

1. Système de visualisation configuré pour être porté par la tête d'un utilisateur portant un casque de communication audio (30) standard de type aéronautique utilisé dans l'aviation civile constitué d'un premier arceau (31) et de deux écouteurs latéraux (32), ledit système de visualisation comportant au moins un serre-tête (10) en forme de bandeau et un dispositif de visualisation (20) monté sur ledit serre-tête, **caractérisé en ce que** ledit serre-tête comporte deux pontets latéraux symétriques (12D, 12D), chaque pontet étant en forme d'arche de façon à ménager une ouverture (13D, 13G) de un à deux centimètres entre ladite arche et la tête de l'utilisateur de façon que, lorsque le système est porté par la dite tête, ladite ouverture est suffisante pour laisser passer un des deux bras latéraux du premier arceau.

2. Système de visualisation selon la revendication 1, **caractérisé en ce que** le serre-tête comporte un second arceau de tête (16) réglable en longueur et monté en avant des pontets.

3. Système de visualisation selon la revendication 1, **caractérisé en ce que** le serre-tête comporte une cale de nuque (14) réglable en longueur.

4. Système de visualisation selon la revendication 1, **caractérisé en ce que** le dispositif de visualisation comporte un module optique comprenant un afficheur, une optique de collimation et une lame optique (24) mince de superposition d'images.

5. Système de visualisation selon la revendication 4, **caractérisé en ce que** le dispositif de visualisation comporte un ensemble de détection de posture (22, 23) fixé sur le module optique.

6. Système de visualisation selon la revendication 5, **caractérisé en ce que** l'ensemble de détection de posture est hybride et comporte un système de reconnaissance optique (22) et un capteur inertiel (23).

7. Système de visualisation selon l'une des revendications précédentes, **caractérisé en ce que** le serre-tête comporte des moyens de translation et de rotation du dispositif de visualisation, lesdits moyens de rotation comportant un pivot ou une rotule articulés (21).

8. Système de visualisation selon la revendication 7, **caractérisé en ce que** le dispositif de visualisation a une première position d'utilisation dans laquelle la lame optique est disposée devant un œil de l'utilisateur et une seconde position de rangement, ladite seconde position étant sensiblement perpendiculaire à la première position, la lame optique étant disposée au niveau du front de l'utilisateur dans cette seconde position.

## Patentansprüche

1. Visualisierungssystem, welches konfiguriert ist, um durch den Kopf eines Benutzers getragen zu werden, welcher einen Standard-Audiokommunikations-Helm (30) vom Typ Luftfahrthelm trägt, welcher in der zivilen Luftfahrt verwendet wird, bestehend aus einem ersten Bügel (31) und zwei seitlichen Hörern (32), wobei das Visualisierungssystem mindestens ein Kopfband (10) in Form eines Bandes und eine Visualisierungsvorrichtung (20) beinhaltet, welche an dem Kopfband montiert ist, **dadurch gekennzeichnet, dass** das Kopfband zwei symmetrische seitliche Brücken (12D, 12G) beinhaltet, wobei jede Brücke eine Bogenform aufweist, um eine Öffnung (13D, 13G) von ein bis zwei Zentimeter zwischen dem Bogen und dem Kopf des Benutzers zu schaffen, so dass, wenn das System durch den Kopf getragen wird, die Öffnung ausreicht, um einen der beiden seitlichen Arme des ersten Bügels passieren zu lassen.

2. Visualisierungssystem nach Anspruch 1, **dadurch gekennzeichnet, dass** das Kopfband einen zweiten, längenverstellbaren Kopfbügel (16) beinhaltet, welcher vor den Brücken montiert ist.

3. Visualisierungssystem nach Anspruch 1, **dadurch gekennzeichnet, dass** das Kopfband einen längenverstellbaren Nackenkeil (14) beinhaltet.

4. Visualisierungssystem nach Anspruch 1, **dadurch gekennzeichnet, dass** die Visualisierungsvorrichtung ein optisches Modul beinhaltet, welches ein Display, eine Kollimationsoptik und eine dünne optische Scheibe (24) zur Überlagerung von Bildern beinhaltet.

5. Visualisierungssystem nach Anspruch 4, **dadurch gekennzeichnet, dass** die Visualisierungsvorrichtung eine Haltungserkennungsbaugruppe (22, 23) beinhaltet, welche an dem optischen Modul befestigt ist.

6. Visualisierungssystem nach Anspruch 5, **dadurch gekennzeichnet, dass** die Haltungserkennungsbaugruppe hybrid ist und ein optisches Erkennungssystem (22) und einen Trägheitssensor (23) beinhaltet.

7. Visualisierungssystem nach einem der vorhergehenden Ansprüche, **dadurch gekennzeichnet, dass** das Kopfband Verschiebungs- und Rotationsmittel der Visualisierungsvorrichtung beinhaltet, wobei die Rotationsmittel einen gelenkigen Drehzapfen oder ein gelenkiges Kugelgelenk (21) beinhalten.

8. Visualisierungssystem nach Anspruch 7, **dadurch gekennzeichnet, dass** die Visualisierungsvorrichtung eine erste Benutzungsposition, bei welcher die optische Scheibe vor einem Auge des Benutzers angeordnet ist, und eine zweite Verstauungsposition aufweist, wobei die zweite Position im Wesentlichen rechtwinklig zur ersten Position ist, wobei die optische Scheibe in dieser zweiten Position auf Höhe der Stirn des Benutzers angeordnet ist.

## Claims

1. Visualisation system configured to be worn on the head of a user wearing a standard aviation audio communication headset (30) used in civil aviation comprised of a first arch (31) and two lateral headphones (32), said visualisation system comprising at least one headband (10) in the form of a strip and one visualisation device (20) mounted on said headband, **characterised in that** said headband comprises two symmetrical, lateral bridges (12D, 12G), each bridge being in the form of an arch so as to leave an opening (13D, 13G) of one to two centimetres between said arch and the head of the user so that, when the system is being worn on said head, said opening is sufficient to allow one of the two lateral arms of the first arch pass through.

2. Visualisation system according to claim 1, **characterised in that** the headband comprises a second head arch (16) adjustable in length and mounted in front of the bridges.

3. Visualisation system according to claim 1, **characterised in that** the headband comprises a neck wedge (14) adjustable in length.

4. Visualisation system according to claim 1, **characterised in that** the visualisation device comprises an optical module comprising a display, collimation optics and a thin optical plate (24) for superimposing images.

5. Visualisation system according to claim 4, **characterised in that** the visualisation device comprises a posture recognition assembly (22, 23) fixed on the optical module.

6. Visualisation system according to claim 5, **characterised in that** the posture recognition assembly is hybrid and comprises an optical recognition system (22) and an inertial sensor (23).

7. Visualisation system according to one of the previous claims, **characterised in that** the headband comprises means of moving and rotating the visualisation device, said means of rotating comprising an articulated pivot or ball joint (21).

8. Visualisation system according to claim 7, **characterised in that** the visualisation device has a first operating position in which the optical plate is positioned in front of an eye of the user and a second stowed position, said second position being substantially perpendicular to the first position, the optical plate being positioned at the level of the user's forehead in this second position.
